# EUROPEAN PATENT APPLICATION

(11) **EP 2 833 522 A1**
(43) Date of publication of application: **04.02.2015**
(21) Application number: 14172527.5
(22) Date of filing: 16.06.2014
(51) Int. Cl.: H02K 5/14, H02K 11/00, H02K 11/02, H02K 7/116

(54) **Wiper system and its motor assembly**

(30) Priority: 29.07.2013 CN 201320456346 U
(71) Applicant: Bosch Automotive Products (Changsha) Co., Ltd., Changsha Hunan 410100 (CN)
(72) Inventor: Zhao, Zhanzhi, 410100 Changsha Hunan (CN); Zhu, Hansong, 410100 Changsha Hunan (CN)
(74) Representative: Bee, Joachim

(57) **Abstract**

The utility model relates to a motor assembly (200) which comprises a commutator; an electromagnetic shielding cover (240, 240') surrounding the commutator closely or semi-closely; and a bracket supporting the electromagnetic shielding cover (240, 240'), wherein the bracket comprises a bearing surface (236), and at least a portion of the electromagnetic shielding cover (240, 240') is carried on the bearing surface (236) and is shaped to be conformed with the shape of the bearing surface (236). The utility model also relates to a wiper system comprising the above motor assembly. The electromagnetic shielding cover has a simple structure and a low cost, and it is easy to modify the electromagnetic shielding cover according to different types of motors.

## Description

### Technical Field

The utility model relates to a motor assembly and to a wiper system for a vehicle comprising the motor assembly.

### Background Art

High power wiper motors, typically permanent magnet DC motors, are widely used in most of modern cars, and electromagnetic interference often occurs to other electronic components in the cars due to commutation or switch of the motors. The electromagnetic interference comprises interference conducted via cables and interference radiated via space. In the prior art, measures taken to resist the conducted interference comprise providing a filter on electrodes of the motors to form a filter circuit, the filter generally comprising capacitance and inductance, and measures taken to resist the radiated interference comprise providing an electromagnetic shielding cover near a commutator of the motor to reduce or eliminate propagation of electromagnetic energy generated by sparks between the commutator and a brush of the motor, and the electromagnetic shielding cover is electrically conductive.

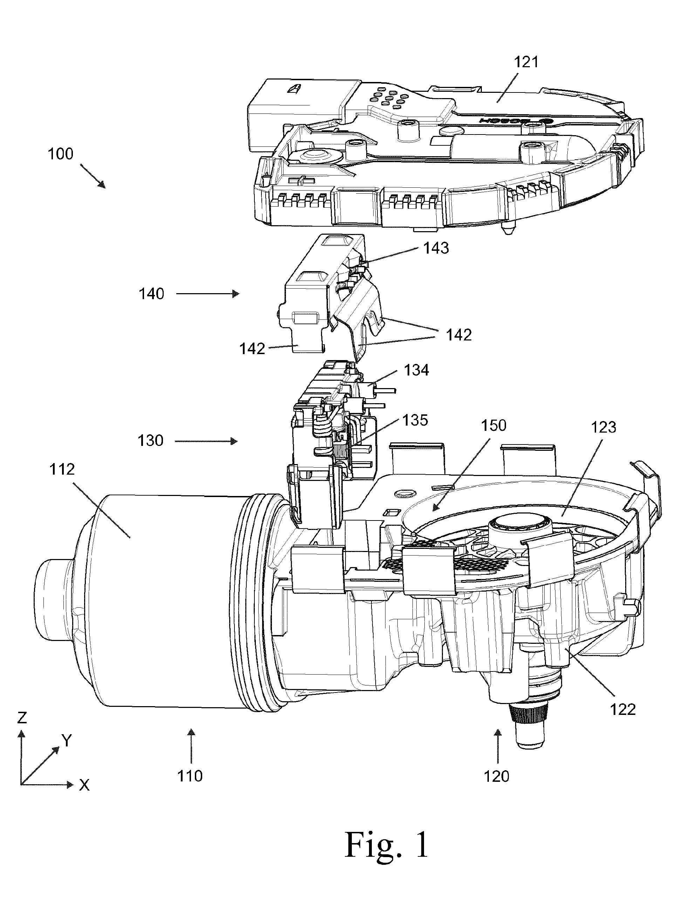

A conventional electromagnetic shielding cover is a preformed rigid part which is generally made of a metal material, as shown in Fig. 1. As can be seen in Fig. 1, a motor assembly 100 comprises a motor 110 and a transmission 120, the motor 110 and the transmission 120 comprising respectively a motor housing 112 and a transmission housing with their internal spaces communicated with each other. The transmission housing is consisted of an upper housing 121 and a lower housing 122.

An output shaft and a commutator (not shown) of the motor 110 extend into a cavity 150 through the lower housing 122, the output shaft being kinematically engaged with a worm and worm gear mechanism 123 mounted in the cavity 150. Thus, the worm and worm gear mechanism 123 functions to transform a high speed rotation of the output shaft of the motor into a low speed rotation during the operation of the motor 110.

A brush holder 130 is provided at the rear side of the commutator in the cavity 150, and an electromagnetic shielding cover 140 is provided over the brush holder 130. As illustrated, the conventional electromagnetic shielding cover 140 has a shape substantially corresponding to that of the brush holder 130, which is in a form of a substantially rectangular box, with a tongue 142 for snapping extending out from an edge of an opening of the box so that the electromagnetic shielding cover can be fixed on the brush holder 130 of the motor assembly 100 with the opening facing downwards. Upon being mounted over the brush holder 130, the electromagnetic shielding cover 140 covers a top portion of the brush holder 130, and feedthrough capacitors 134 on the brush holder 130 are exposed to outside through wallholes 143 in the electromagnetic shielding cover. Thus, the electromagnetic shielding cover 140 is arranged to surround electromagnetic interference sources (the commutator and the brush 135) closely or semi-closedly so as to shield the radiated interference of the sparks generated during the commutation.

However, the conventional electromagnetic shielding cover 140 made of metal has a complex structure and a high cost. As the rigid electromagnetic shielding cover 140 can not be shaped to be conformed to the shape of an outer wall of the brush holder 130, modifications for the conventional electromagnetic shielding cover 140 directed to various types of motors are difficult to achieve.

### Summary of the Utility Model

An object of the utility model is to provide a motor assembly with a low cost electromagnetic shielding cover with a simply structure which is easy to be modified based on various types of motors, the electromagnetic shielding cover being formed by being conformed to the shape of a bearing surface of a bracket supporting the electromagnetic shielding cover.

To this end, an aspect of the utility model provides a motor assembly, which comprises a commutator; an electromagnetic shielding cover surrounding the commutator closedly or semi-closedly; and a bracket supporting the electromagnetic shielding cover, wherein the bracket comprises a bearing surface, and at least a portion of the electromagnetic shielding cover is carried on the bearing surface and is shaped to be conformed to the shape of the bearing surface.

According to a preferred embodiment of the utility model, the electromagnetic shielding cover comprises a flexible electromagnetic shielding tape which is attached to the bearing surface.

According to a preferred embodiment of the utility model, the tape is wound on the bearing surface by at least one turn.

According to a preferred embodiment of the utility model, the tape is wound on the bearing surface by a plurality of turns.

According to a preferred embodiment of the utility model, the electromagnetic shielding cover comprises an electromagnetic shielding coating which is applied to the bearing surface.

According to a preferred embodiment of the utility model, the motor assembly further comprises an additional electromagnetic shielding cover which comprises an electromagnetic shielding coating applied to an inner wall of a transmission housing of the motor assembly.

According to a preferred embodiment of the utility model, the motor assembly comprises an insulated housing in which the bracket is mounted, and a brush is mounted on the bracket.

An object of the utility model is to provide a wiper system comprising a motor assembly with the above benefits.

To this end, another aspect of the utility model provides a wiper system for a vehicle, wherein the wiper system comprises a motor assembly according described as above; a wiper arm assembly for performing a reciprocatingly swinging movement on a windshield of the vehicle; and a transmission assembly connected between the motor assembly and the wiper arm assembly.

A wiper system according to the utility model, especially its motor assembly, comprises an electromagnetic shielding cover which is not preformed, and then the cost associated with structural design and mould manufacture is avoided. In addition, the wiper system according to the utility model, especially its motor assembly, comprises an electromagnetic shielding cover having an excellent conformability to various types of motors so as to be modified easily. The electromagnetic shielding cover is formed by being conformed to the shape of a bearing surface of a bracket supporting the electromagnetic shielding cover.

### Brief Description of the Drawings

Other advantages and features of the utility model will be apparent from the description of embodiments of the utility model in conjunction with the drawings, in which:
Fig. 1 is an exploded perspective view of a motor assembly according to prior art;
Fig. 2 is an exploded perspective view of a motor assembly according to a first embodiment of the utility model;
Fig. 3 is a perspective view of a bracket and an electromagnetic shielding cover of the motor assembly in Fig. 2;
Fig. 4 is a perspective view of a lower housing of a transmission of the motor assembly in Fig. 2, wherein the lower housing is connected with a motor housing;
Fig. 5 is a perspective view of an upper housing of the transmission of the motor assembly in Fig. 2; and
Fig. 6 is a perspective view of a bracket and an electromagnetic shielding cover of a motor assembly according to a second embodiment of the utility model.

Throughout the drawings, the same reference numerals indicate the same or similar features.

### Detailed Description of Preferred Embodiments

A wiper system according to the utility model, and in particular its motor assembly, comprises an electromagnetic shielding cover having an excellent conformability to various types of motors so as to be modified easily, instead of the preformed electromagnetic shielding cover in the prior art. The electromagnetic shielding cover can be carried by a bracket which may be a brush holder and may also be another electrically conductive portion of a motor housing.

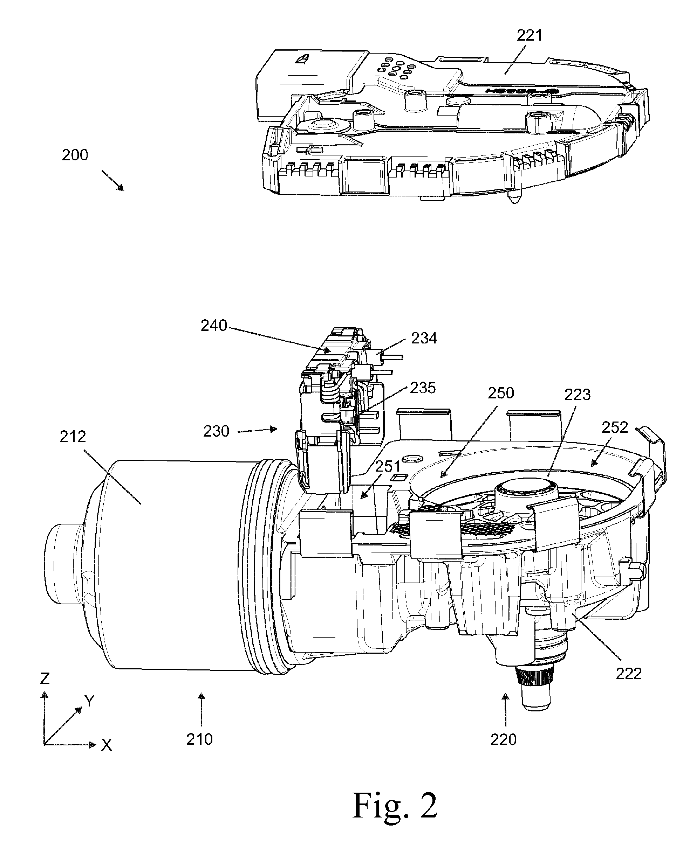

A first embodiment of the utility model will be described hereinafter with reference to Figs. 2-4. The structure in this embodiment is similar to that shown in Fig. 1 except the electromagnetic shielding cover.

In the context, directional terms "front" and "rear" are defined with reference to an X axis of a XYZ rectangular coordinate system shown in respective drawings, wherein the directional term "front" refers to a positive direction of the X axis (the direction of an arrow). Directional terms "distal" and "proximate" are defined with reference to a Y axis, wherein the directional term "distal" refers to a positive direction of the Y axis (the direction of an arrow). Directional terms "up" and "down" are defined with reference to a Z axis, wherein the directional term "up" refers to a positive direction of the Z axis (the direction of an arrow).

Fig. 2 is an exploded perspective view of a motor assembly 200 according to the first embodiment of the utility model. In this embodiment, an electromagnetic shielding cover 240 comprises an electromagnetic shielding coating.

As shown in Fig. 2, the motor assembly 200 comprises a motor 210 and a transmission 220, the motor 210 and the transmission 220 comprising respectively a motor housing 212 and a transmission housing whose internal spaces are communicated with each other.

The transmission housing is consisted of an upper housing 221 and a lower housing 222. Typically, the upper housing 221 is made of a plastic material, and the lower housing 222 is made of a metal material, for example, Al. The upper and lower housings 221 and 222 define a cavity 250 with their inner walls.

The cavity 250 comprises a commutator accommodating region 251 proximate to the motor 210, which houses a commutator and an output shaft (not shown) therein, and a transmission accommodating region 252 distal from the motor 210, which houses the transmission therein.

The output shaft and the commutator of the motor 210 extend into the commutator accommodating region 251 through the lower housing, wherein the output shaft is kinematically engaged with the transmission which is accommodated in the cavity, such as a worm and worm gear mechanism 223. For example, the output shaft is at its end connected with or integrally formed with a worm of the worm and worm gear mechanism, and the worm is engaged with a worm gear of the worm and worm gear mechanism. In this way, the worm and worm gear mechanism 223 functions to transform a high speed rotation of the output shaft of the motor into a low speed rotation during the operation of the motor 200. However, it can be conceived of by a skilled in the art that the utility model may also be applied to a motor assembly comprising other type of transmission mechanism.

The brush holder 230 is arranged in a substantially similar manner to the brush holder 130 shown in Fig. 1 and is mounted at a rear side of the commutator in the cavity 250.

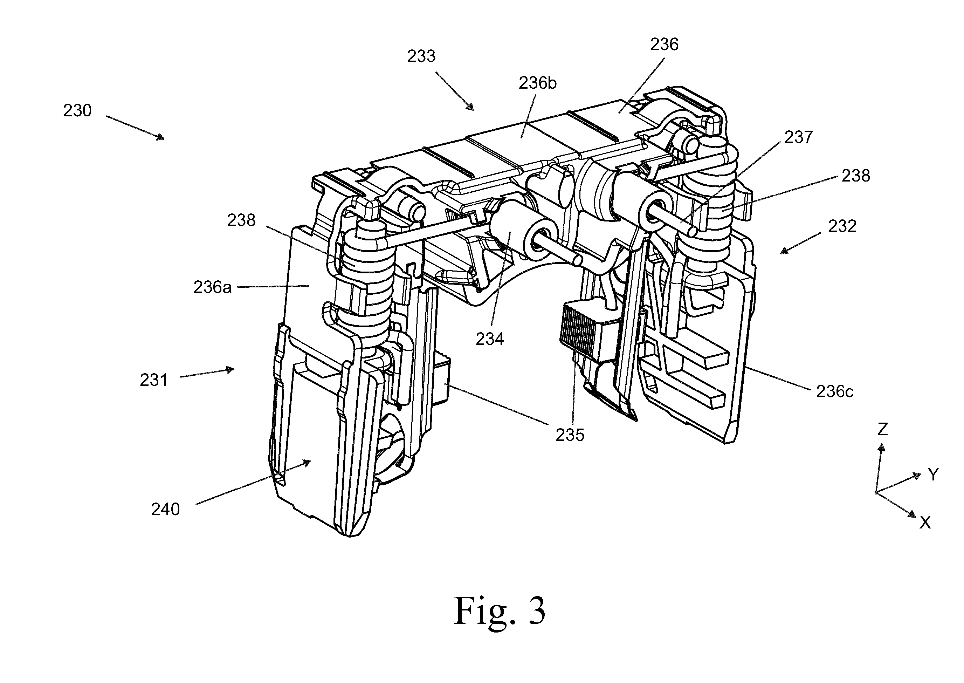

Fig. 3 is a perspective view of a bracket and an electromagnetic shielding cover of the motor assembly according to the first embodiment of the utility model. In this embodiment, the bracket is configured as the brush holder 230 of the motor assembly 200. However, it should be understood that the bracket of the utility model is not limited to the brush holder 230 and it can also be any other suitable structure in the motor assembly.

As shown in Fig. 3, the brush holder 230 can be a separate part having a general U shape, in which it has a width along the X direction substantially corresponding to the length of the commutator along the X direction. The brush holder 230 defines a certain space inside of it, the space having a width along the Y direction which is substantially equal to its height along the Z direction and which substantially corresponds to the diameter of the commutator so as to cooperate with the commutator to commutate the motor.

The brush holder 230 comprises a first portion 231, a second portion 232 opposite to the first portion 231, and a third portion 233 between the first portion 231 and the second portion 232. The first portion 231 and the second portion 232 extend parallel to each other and each house an inductance element 238, and the third portion 233 extends perpendicularly to the first and second portions and houses a capacitive element 234. Both the inductance elements 238 and the capacitive element 234 constitute a filter which is configured for improving Electro Magnetic Compatibility (EMC) of the motor assembly 200 in combination with the electromagnetic shielding cover.

It should be understood that the bracket according to the utility model may also have other shapes, such as a rectangular shape, an annular shape, a circular shape, or a disc shape, closed or non-closed.

Upon the brush holder 230 being mounted in a first recess 222a of the upper housing 222 of the transmission, the first and second portions 231 and 232 are positioned at opposite sides of the commutator of the motor assembly 200, and the third portion 233 is located on top of the commutator. The first and second portions 231 and 232 of the brush holder 230 may comprise one brush 235, respectively, at their internal sides towards the commutator, and thus the two brushes 235 face to each other and cooperate with the commutator to change a current direction of an armature winding.

It should be understood that, according to the utility model, the brush holder 230 can also be a brush holder comprising three brushes, in which two of which are arranged uniformly in a circumferential direction as shown in this embodiment and the third one is arranged in the same plane as the two brushes and adjacent to one of the two brushes in the circumferential direction. The brush holder constructed as above renders the motor assembly comprising the same to be operated at two different rotational speeds.

As illustrated, the first portion 231 comprises a substantially rectangular first surface 236a at its proximate side, the second portion 232 comprises a substantially rectangular second surface 236c at its distal side, and the third portion 233 comprises a substantially rectangular third surface 236b at its upper side away from the commutator. The first and second surfaces 236a and 236c have the same shape and size and face opposite directions, and the third surface 236b is slightly longer than the first and second surfaces 236a and 236c and faces upwards.

The first, second and third surfaces 236a, 236c and 236b constitute a bracket bearing surface 236 for carrying the electromagnetic shielding cover 240, which surrounds the commutator in a semi-closed manner, and the electromagnetic shielding cover 240 in this embodiment comprises a coating. It should be understood that the bearing surface can also surrounds the commutator in a closed manner in a case that the brush holder is a closed ring.

According to one embodiment, the coating is applied to the bracket bearing surface 236 of the bracket, for example, by spray coating or by brush coating. For example, the coating is applied to the entire bracket bearing surface 236 of the brush holder 230 shown in Fig. 2 so as to form the electromagnetic shielding cover 240 which extends parallel to an axial direction and has the generally U-shape cross-section.

It can be understood that the electromagnetic shielding cover 240 can be completely conformed to the shape of the surface to which it is attached at all locations, and thus as for the shape of the electromagnetic shielding cover 240, please refer to the description of the shape of the bearing surface 236 of the brush holder 230.

The coating according to the utility model can be a coating of conductive lacquers mixed with metallic powders such as Ag, Cu, Ni etc, of conductive inks, or of conductive resins etc. However, any other electromagnetic shielding paints well known to a skilled in the art are also possible.

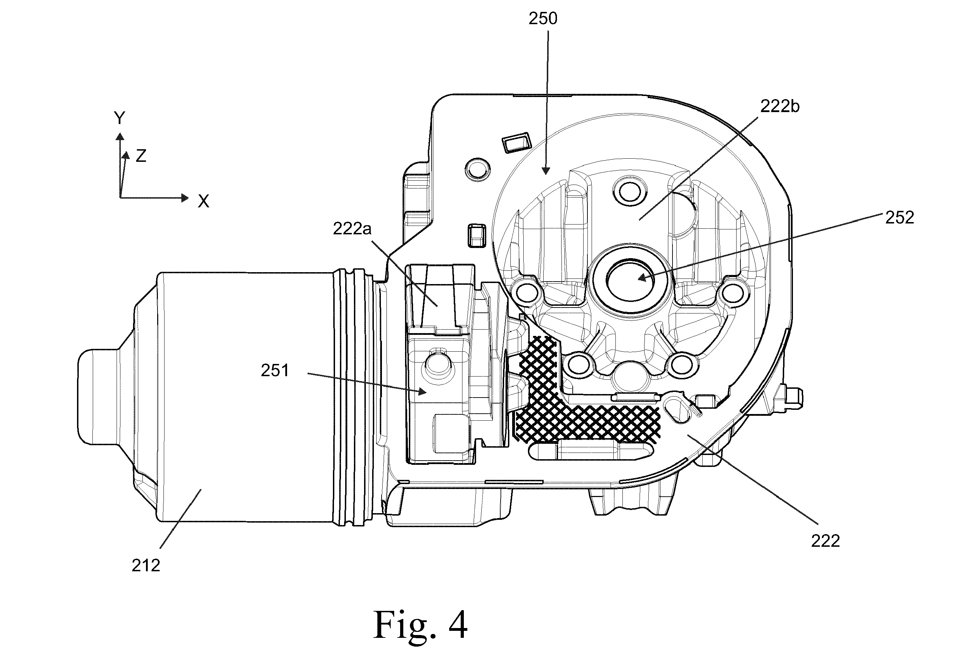

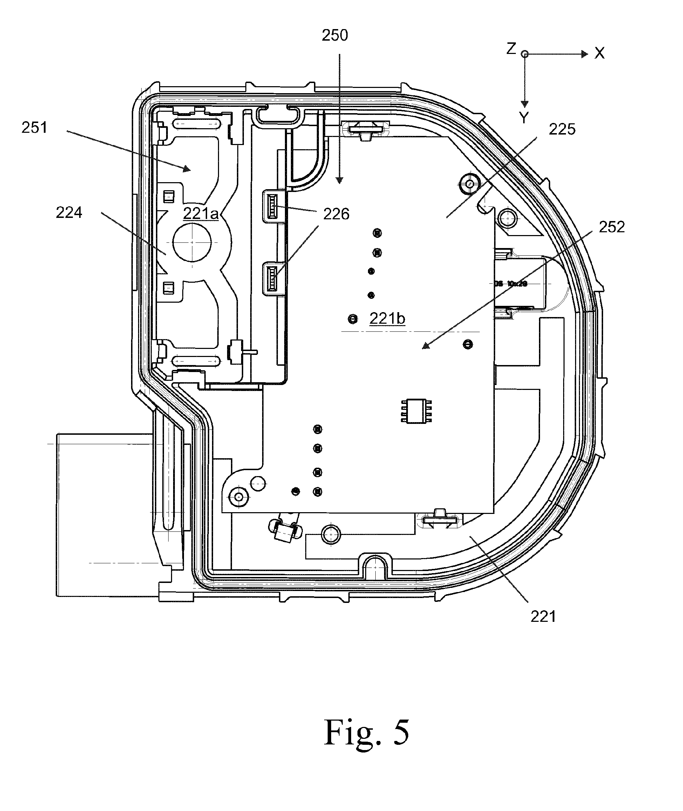

Figs. 4 and 5 are perspective views of the lower housing 222 and the upper housing 221 of the transmission 220 of the motor assembly 200 according to the first embodiment of the utility model, respectively, wherein details of the cavity 250 are shown more clearly.

As described above, the cavity 250 comprises the commutator accommodating region 251 and the transmission accommodating region 252 at a front and distal side of the commutator accommodating region 251. The commutator and the output shaft of the motor assembly 200 are accommodated in the commutator accommodating region 251, and the transmission of the motor assembly 200, for example, the worm and worm gear mechanism 223, is accommodated in the transmission accommodating region 252.

In this embodiment, the commutator accommodating region 251 of the cavity 250 has a lower side defined by the first recess 222a of the lower housing 222 adjacent to the motor 210 and an upper side defined by a first inner wall portion 221 a of the upper housing 221 facing the first recess 222a. The transmission accommodating region 252 of the cavity 250 has a lower side defined by the second recess 222b of the lower housing 222, which is away from the motor 210 and is communicated with the first recess 222a, and an upper side defined by a second inner wall portion 221b of the upper housing 221 facing the second recess 222b.

As shown in Fig. 4, the first recess 222a has a substantially rectangular shape. The first recess 222a has a width along the X direction substantially corresponding to the length of the brush holder along the X direction, and has a length along the Y direction and a depth along the Z direction which are substantially equal to each other and substantially correspond to the length along the Y direction and the depth along the Z direction of the brush holder 230 respectively, so that the brush holder 230 can be placed in the commutator accommodating region 251 of the cavity in a compact manner.

The second recess 222b has a substantially cylindrical shape with its central axis extending along the Z direction and its diameter being slightly larger than that of the worm gear, so that the worm gear can be arranged in the second recess in a compact manner. The worm extends out from the output shaft in the first recess 222a and is located at a side of the second recess 222b proximate to the first recess 222a so as to be engaged with the worm gear in the second recess 222b to form the worm and worm gear mechanism 223.

As shown in Fig. 5, the upper housing 221 of the transmission housing has a substantially semi-circular shape and defines a cavity portion inside of the upper housing 221 which has a dimension in the Z direction smaller than that defined by the lower housing 222.

The upper housing 221 is provided in a rear portion within it with a plug portion 224 for connecting with outer leads, the plug portion 224 having a substantially rectangular shape, being relatively small in size and being integrally formed with the upper housing 221.

The upper housing 221 is provided in a middle portion within it with a PCB 225 for carrying a circuit which is configured for controlling the motor assembly 200, the PCB 225 having a substantially rectangular shape, being relatively large in size and being electrically connected between the plug portion 224 and two electrodes 237 (shown in Fig. 3) on the brush holder 230. Upon assembled, the two electrodes 237 are welded onto clamps 226 on a rear edge of the PCB 225.

The first inner wall portion 221a of the upper housing 221 facing the first recess 222a is generally defined by a bottom surface of the plug portion 224, and it defines the commutator accommodating region 251 of the cavity 250 together with the first recess 222a. The second inner wall portion 221b of the upper housing 221 facing the second recess 222b is generally defined by a bottom surface of the PCB 225, and it defines the transmission accommodating region 252 of the cavity 250 together with the second recess 222b.

According to another embodiment, the coating is also applied to an inner wall of the transmission housing defining the cavity 250, constituting an additional electromagnetic shielding cover. As the lower housing 222 of the transmission housing in this embodiment is made of metal and has an electromagnetic shielding capability to some extent, the additional coating can only be applied to the inner wall of the upper housing 22 of the transmission housing, preferably only be applied to the first inner wall portion 221a facing the first recess 222a of the lower housing 222 to ensure sufficient electromagnetic shielding effect while saving coating material.

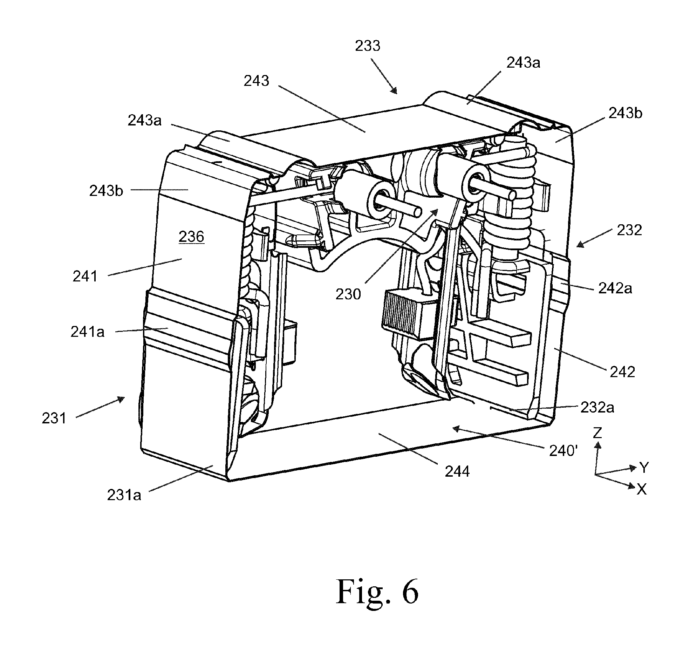

A second embodiment of the utility model will be described with reference to Fig. 6. A motor assembly according to this embodiment has a structure as same as that shown in Figs. 2-4 and similar to corresponding portions of the motor assembly according the first embodiment except an electromagnetic shielding cover 240', and then the description with reference to the first embodiment can be referred to. In this embodiment, the electromagnetic shielding cover 240' comprises an electromagnetic shielding tape.

Fig. 6 shows a bracket and the electromagnetic shielding cover 240' of the motor assembly according to the second embodiment of the utility model. In this embodiment, the tape forming the electromagnetic shielding cover 240' is wound into a substantially rectangular frame on a brush holder 230, with its width extending parallel to an axial direction. The tape comprises a first section 241 and a second section 242 covering first and second portions 231 and 232 of the brush holder, respectively, a third section 243 covering a third portion of the brush holder, and a fourth section 244 hanging between lower ends 231a and 232a of the first and second portions 231 and 232.

In this embodiment, both the lower ends (free ends) 231 a and 232a of the first and second surfaces 236a and 236b extend to a location which has such a distance from a bottom of a commutator that the tape when wound on a bearing surface 236 will not affect the operation of the commutator and of other neighbouring components of the motor.

As illustrated, the first and second sections 241 and 242 can be provided with projections 241a and 242a protruding outwards from opposite sides, respectively, the third section 243 can be provided with two projections 243a protruding upwards, the fourth section 244 is straight, and chamfering edges 243b can be formed at connecting portions between the first and second sections 241 and 242 and the third section 243.

It should be understood that, as the tape is flexible, the shapes, sizes, positions and present or not of the projections 243a and of the chamfering edges 243b and of other flat portions of the frame depend on the shape of the bracket and especially of the bearing surface 236 of the bracket. In another word, the shape of at least the first, second and third sections 241, 242 and 243 of the electromagnetic shielding cover 240' formed by the tape is conformed to the shape of the bearing surface 236.

In another embodiment, the electromagnetic shielding cover 240' is formed by the tape being wound radially into a plurality of layers, to improve the shielding effect against the radiated interference.

In a further embodiment, the tape is also wound around the third portion 233 of the brush holder 230 to form an electromagnetic shielding cover having a shape that is similar to that of the conventional electromagnetic shielding cover 140 as shown in Fig. 1, to obtain an increased covering range and an improved shielding effect.

It should be understood that the tape can also be wound in other ways without departing from the scope of the utility model.

The tape according to this embodiment can be an electrically conductive paper tape, an electrically conductive cloth tape, an electrically conductive adhesive tape etc, in which fibers plated with electrically conductive metals, such as Ag, Cu, Ni etc., can be contained. However, other electromagnetic shielding tapes well known to the skilled in the art are also possible.

It should be understood that the tape in the second embodiment can be used in combination with the coating in the first embodiment without going beyond the scope of the utility model. For example, the tap is wound on the brush holder 230 as shown in Fig. 6, and the coating is applied to the first inner wall portion 221 a of the upper housing 221 at the same time.

To sum up, a wiper system according to the utility model, especially its motor assembly, comprises an electromagnetic shielding cover having an excellent conformability to various types of motors so as to be modified easily, instead of the preformed electromagnetic shielding cover as in the prior art. The electromagnetic shielding cover can be carried by a bracket of the motor assembly which may be a brush holder of a motor of the motor assembly and may also be another electrically conducting portion of a motor housing of the motor assembly.

Although special embodiments of the utility model have been described as above, they are illustrative and non-limiting. Rather, various combinations, substitutions and modifications to features of the embodiments described as above can be made to the skilled in the art without departing from the scope of the utility model which is only defined by the following claims.

## Claims

1. A motor assembly (200) comprising:
a commutator;
an electromagnetic shielding cover (240, 240') surrounding the commutator closedly or
semi-closedly; and
a bracket supporting the electromagnetic shielding cover (240, 240'),
**characterized in that** the bracket comprises a bearing surface (236), and at least a portion of the electromagnetic shielding cover (240, 240') is carried on the bearing surface (236) and is shaped to be conformed to the shape of the bearing surface (236).

2. The motor assembly (200) of claim 1, **characterized in that** the electromagnetic shielding cover comprises a flexible electromagnetic shielding tape which is attached to the bearing surface (236).

3. The motor assembly (200) of claim 2, **characterized in that** the tape is wound on the bearing surface (236) by at least one turn.

4. The motor assembly (200) of claim 3, **characterized in that** the tape is wound on the bearing surface (236) by a plurality of turns.

5. The motor assembly (200) of claim 1, **characterized in that** the electromagnetic shielding cover comprises an electromagnetic shielding coating which is applied to the bearing surface (236).

6. The motor assembly (200) of any one of claims 2 to 5, **characterized in that** the motor assembly further comprises an additional electromagnetic shielding cover which comprises an electromagnetic shielding coating applied to an inner wall of a transmission housing of the motor assembly.

7. The motor assembly (200) of claim 1, **characterized in that** the motor assembly comprises an insulated housing in which the bracket (230) is mounted, and brushes of the motor are mounted on the bracket.

8. A wiper system for a vehicle, **characterized in that** the wiper system comprises a motor assembly according to any one of claims 1-7; a wiper arm assembly for performing a reciprocatingly swinging movement on a windshield of the vehicle; and a transmission assembly connected between the motor assembly and the wiper arm assembly.
